# EUROPEAN PATENT APPLICATION

(11) **EP 1 223 536 A1**
(43) Date of publication of application: **17.07.2002**
(21) Application number: 01310833.7
(22) Date of filing: 21.12.2001
(51) Int. Cl.: G06K 7/10, G06K 9/00

(54) **Data reader and method of use thereof**

(30) Priority: 11.01.2001 GB 0100736
(71) Applicant: Pace Micro Technology PLC, Saltaire, Shipley, BD14 3LF (GB)
(72) Inventor: Entwistle, Paul, Bramley, Hampshire RG26 5AG (GB)
(74) Representative: Wood, Graham

(57) **Abstract**

A data reader for reading data provided as part of a barcode (2). The barcode (2) includes a plurality of black bars (6) and white spaces (8) in a pre-determined arrangement (4), with characters in the form of numbers (10) represented by the pre-determined arrangement (4) provided adjacent the arrangement. The data reader is provided with image capture and processing means to identify the barcode (2) and/or the numbers (10), capture at least one image of the numbers (10) and process the at least one image to identify the numbers (10) and read data represented by the numbers. The data is then used by the data reader to identify an item or items to which the barcode (2) corresponds or one or more attributes of the item.

## Description

This invention relates to a data reader device particularly, although not necessarily exclusively, for use with data provided as part of a barcode and a method of use thereof.

Barcodes are used for data management purposes in many different applications such as in supermarkets, retail outlets, warehouses and/or the like. There are several different kinds of barcode but they typically comprise a series of black bars and white spaces, the arrangement and spacing between the bars and spaces representing a set of values. These values represent a plurality of characters, typically decimal numbers and/or letters, which correspond to data relating to the product on which the bar code is located. For example, the characters can provide information on the type of product the barcode is on, the manufacturer who made the product and/or the like. The characters to which these values relate are also typically provided under the black bars and white spaces in the event that the code arrangement of bars and spaces has been damaged or partially lost.

Barcodes are typically read by laser scanners which fire beams across the bar code to detect the arrangement of black bars and white spaces. A microprocessor in the scanner then converts the arrangement into a series of characters in the form of numbers and/or letters which are stored in memory means for data management purposes. A problem associated with laser scanner technology is that it is expensive and uses physically moving components.

It is therefore an aim of the present invention to provide a data reader which is less expensive to use than conventional methods, whilst being efficient and easier to use.

According to a first aspect of the present invention there is provided a data reader for reading data on an identifiable portion of an item, said identifiable portion containing one or more characters and characterised in that the data reader is provided with image capture and processing means to identify said identifiable portion of the item, capture at least one image of the characters on the identifiable portion and process said at least one image to identify the characters of the identifiable portion and read data represented by said characters, and using the read data, identify the item or one or more attributes of the item.

If the identifiable portion of the item is not identified then the image capture and processing means are provided with a signal to this effect and do not attempt to capture and process images of the characters.

In one embodiment the identifiable portion of the item is a barcode having a pre-determined arrangement on an outer surface of the item, which the image capture and process means can distinguish from the remaining surface of said item.

In an alternative embodiment the identifiable portion of the item is a price tag/label or an identification number/label/code.

Preferably once the identifiable portion has been identified x, y and/or z coordinates of the characters in the captured image are given and processing of the characters at the given coordinates takes place.

According to a second aspect of the present invention there is provided a data reader for reading data provided as part of a barcode, said barcode including a plurality of black bars and white spaces in a pre-determined arrangement, with characters represented by the pre-determined arrangement provided adjacent the arrangement and characterised in that the data reader is provided with image capture and processing means to capture at least one image of the barcode and/or characters and process said at least one image to identify at least the characters and read data represented by the characters and, using the read data, identify an item or items to which the barcode corresponds or one or more attributes of said item.

Preferably the data reader is a portable processing device.

Preferably the characters are decimal numbers and/or letters.

Preferably the image capture means comprises a camera.

Preferably the image processing means allows character recognition of an identified object to take place. Thus in a first instance the device identifies that the data presented is a barcode and, if it is, proceeds to identify and then process the character data. If the data presented is not a barcode then no processing of any characters occurs.

According to a further aspect of the present invention there is provided a method of reading data on an identifiable portion of an item using a data reader, said identifiable portion containing one or more characters and characterised in that said method includes the steps of identifying said identifiable portion of the item, capturing at least one image of the characters on the identifiable portion, processing said at least one image to identify the characters and read data represented by the characters and, using the read data, identify the item or one or more attributes of said item.

According to a yet further aspect of the present invention there is provided a method of reading data provided as part of a barcode, said barcode including a plurality of black bars and white spaces in a pre-determined arrangement, with characters represented by the pre-determined arrangement provided adjacent the arrangement and characterised in that the method includes the steps of identifying said barcode and/or said characters and processing said at least one image to identify at least the characters and read data represented by said characters and, using the read data, identifying an item or items to which the barcode corresponds or one or more attributes of said item.

An advantage of the present invention is that the barcode portion of the label comprising the black bars and white spaces is not read, thus expensive laser technology is not required. The image capture and processing means incorporates lower cost technology which can be used to quickly and easily read the characters represented by the barcode.

A further advantage is that the present invention can be used in addition to, or as an alternative to conventional barcode readers. For example, with conventional barcode readers, if the laser reading portion of the label is damaged and cannot be read, the user typically has to manually type in the characters adjacent to the code to obtain the same information that the laser would have identified. Since the characters represented by the barcode are usually in fairly small print and may include up to 12 characters, there is a high probability that the user may make an error when typing in the number. However, using the present invention, if the conventional barcode reader is damaged, the characters can still be identified without requiring the user to manually type in the characters. The present invention also reduces the likelihood of error associated with manually typing in the characters represented by the barcode.

An embodiment of the present invention will now be described with reference to the following figure wherein:

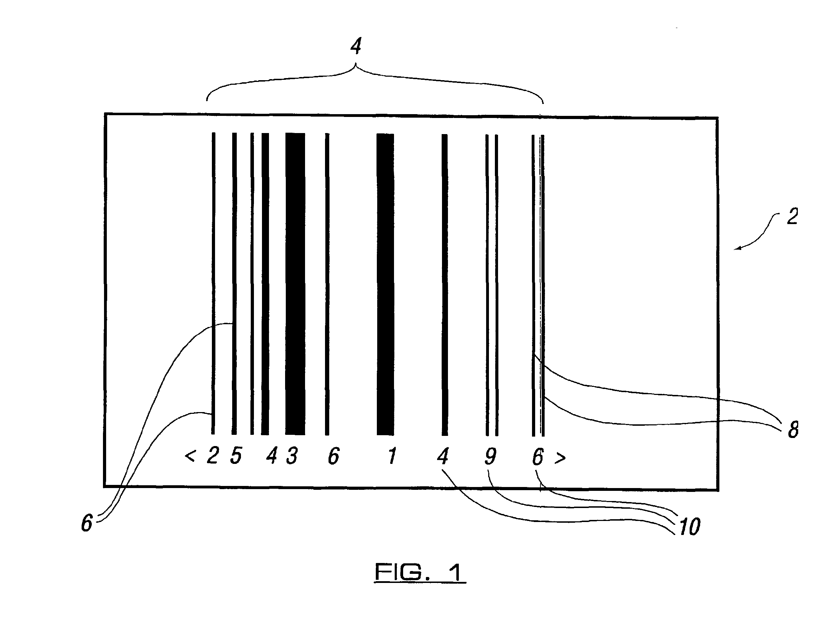

Figure 1 is an example of a barcode which can be read by the present invention.

Referring to Figure 1, there is illustrated a typical conventional barcode label 2 comprising a code 4 in the form of a number of black bars 6 and white spaces 8 in a pre-determined arrangement. The spacing between the bars 6 and spaces 8 represent a set of values. These values correspond to a decimal number 10 which is printed on the label beneath the code 4.

Barcodes can be read by laser scanners which fire beams across the code to detect the arrangement of bars and spaces and thus the set of binary numbers represented by the code. The set of binary numbers is in turn processed by the scanner to produce the decimal number 10. This number is then stored in storage means for use in data management, such as stock taking or similar. A problem with this method of reading bar codes is that laser scanning technology is expensive.

If the laser scanner is unable to read the barcode, a user will then have to manually type the decimal number 10 into the storage means. This is obviously time consuming for the user, particularly if the user is under some time constraint, for example, a busy checkout assistant in a supermarket. In addition, since the decimal number 10 typically can include a large number of digits or letters, there is a likelihood that the characters will be typed in incorrectly.

In accordance with the present invention, a barcode reader is provided which does not actually read the bars 6 and spaces 8 but reads the decimal number 10 beneath the code. The barcode reader comprises a two-dimensional camera which when activated and pointed at the label 2, takes one or more image frames until image processing means are able to identify an area of the image containing a barcode label. Specific features of a barcode label, such as its rectangular shape, vertical correlation, high contrast can be used to identify the region of the image containing the barcode label.

Simple image transformations may also be used to correct for aspect ratio or rotational offsets in the image.

Once the barcode label region has been identified, that region of the label containing the symbols or characters representative of the barcode can then be pre-processed (contrast, edge detection, focus) prior to subsequent character recognition.

The image processing means employs character recognition means to extract the decimal number 10 from the image and thereafter process the number as in conventional barcode readers.

The image processing means can be provided with means to spatially transform the images of the identified label and/or decimal number and feature enhance (i.e., edge and highlight) the number if necessary.

It is noted that the image processing means can be adapted to identify letters, symbols and/or numbers on a surface of an item and distinguish these features over other features that may be contained on the surface of the item.

The present invention can also be enhanced by programming processing means to recognize subsets of invalid codes.

Thus the present invention provides a barcode reader which is inexpensive to use compared to conventional methods and reduces the error associated with manually inputted barcode data.

## Claims

1. A data reader for reading data on an identifiable portion of an item, said identifiable portion containing one or more characters and **characterised in that** the data reader is provided with image capture and processing means to identify said identifiable portion of the item, capture at least one image of the characters on the identifiable portion and process said at least one image to identify the characters of the identifiable portion and read data represented by said characters and, using the read data, identify the item or one or more attributes of said item.

2. A data reader according to claim 1 **characterised in that** the image capture and processing means distinguish the identifiable portion of the item from the remainder of the item.

3. A data reader according to claim 1 **characterised in that** the identifiable portion of the item is any or any combination of a barcode (2), price tag or price label, item label, identification number, label or code.

4. A data reader according to claim 1 **characterised in that** the reader is portable.

5. A data reader according to claim 1 **characterised in that** the characters are decimal numbers (10), symbols and/or letters.

6. A data reader according to claim 1 **characterised in that** the image capture means includes a camera.

7. A data reader according to claim 1 **characterised in that** image transformations are used in the data reader to correct the aspect ratio or rotational offsets in said at least one captured image.

8. A data reader according to claim 1 **characterised in that** once the characters have been identified by the data reader, the characters are pre-processed by the image capture and processing means using contrast, edge detection and/or focus methods.

9. A data reader for reading data provided as part of a barcode (2), said barcode including a plurality of black bars (6) and white spaces (8) in a pre-determined arrangement (4), with characters (10) represented by the pre-determined arrangement (4) provided adjacent the arrangement (4) and **characterised in that** the data reader is provided with image capture and processing means to identify said barcode (2) and/or said characters (10), capture at least one image of the barcode (2) and/or characters (10) and process said at least one image to identify at least the characters (10) and read data represented by said characters (10) and, using the read data, identify an item or items to which the barcode corresponds or one or more attributes of said item.

10. A data reader according to claim 9 **characterised in that** the barcode (2) is identified using any or any combination of its shape, vertical correlation or high contrast.

11. A method of reading data on an identifiable portion of an item using a data reader, said identifiable portion containing one or more characters and **characterised in that** said method includes the steps of identifying said identifiable portion of the item, capturing at least one image of the characters on the identifiable portion, processing said at least one image to identify the characters and read data represented by the characters and, using the read data, identify the item or one or more attributes of said item.

12. A method according to claim 11 **characterised in that** the identifiable portion of the item is any or any combination of a barcode (2), price tag or price label, item label, identification number, label or code.

13. A method of reading data provided as part of a barcode (2) using a data reader, said barcode (2) including a plurality of black bars (6) and white spaces (8) in a pre-determined arrangement (4), with characters represented by the pre-determined arrangement provided adjacent the arrangement and **characterised in that** said method includes the steps of identifying said barcode (2) and/or said characters, capturing at least one image of the barcode (2) and/or characters and processing said at least one image to identify at least the characters and read data represented by said characters and, using the read data, identifying an item or items to which the barcode (2) corresponds or one or more attributes of said item.
